# EUROPEAN PATENT SPECIFICATION

(11) **EP 2 935 881 B1**
(45) Date of publication and mention of the grant of the patent: **20.06.2018**
(21) Application number: 13831934.8
(22) Date of filing: 19.12.2013
(51) Int. Cl.: F03D 80/00

(54) **FLEXIBLE DRIVE SHAFT**
FLEXIBLE ANTRIEBSWELLE
ARBRE D'ENTRAÎNEMENT SOUPLE

(30) Priority: 19.12.2012 GB 201222971
(43) Date of publication of application: 28.10.2015
(73) Proprietor: Romax Technology Limited, Nottingham NG7 2TU (GB)
(72) Inventor: SHIELD, David, Derby Derbyshire DE73 6UR (GB); SCOTT, David, Nottingham Nottinghamshire NG16 2QQ (GB); JOHNSTONE, Gary, Nottingham Nottinghamshire NG7 2TU (GB); LEVELL, Paul, Wrexham Clwyd LL13 0NL (GB); GIBBS, Paul, Totterdown Bristol BS4 3DD (GB)
(86) International application number: PCT/GB2013/053372
(87) International publication number: WO 2014/096841

(56) References cited:
- EP-A1- 1 677 005
- EP-A1- 2 372 151
- EP-A1- 2 397 690
- EP-A2- 1 900 946
- WO-A1-03/037608
- WO-A2-2009/052826

## Description

### Field of Invention

The present invention relates to power transmission systems for wind or water turbines. More particularly, the present invention relates to an arrangement for transmitting torque from the rotor of a wind turbine to the gearbox while minimising the negative effects of structural deflections and manufacturing tolerances.

### Background Art

Wind turbine drivetrains commonly consist of an aerodynamic rotor, which is supported on a rotor shaft, itself supported on one or more bearings, which support the shaft relative to the turbine structure while permitting rotation around the rotor axis. The rotor shaft is connected to a speed increasing gearbox, commonly comprising a number of planetary and/or parallel gear stages. The output of this gearbox is then connected by a further shaft to a generator which produces the electrical output. EP1677005A1 is an example of such an arrangement.

In addition to the torque load causing rotation around the main axis, the rotor shaft is also subject to off-axis loads, chiefly moments around axes perpendicular to the main axis. These loads cause deflections of the rotor shaft and supporting structure. If these loads and deflections are transmitted into the gearbox, they can have damaging effects on the gears and bearings, leading to premature failure.

Historically, this has led to turbine designs where the weight of the gearbox is supported primarily by a rigid connection between the rotor shaft and the gearbox input member, with a second connection between the gearbox housing and the turbine structure which is designed to resist only torque around the main axis, while permitting the entire gearbox to move freely in other directions in response to deflections of the rotor shaft, thus preventing the generation of harmful forces within the gearbox itself.

Thus US4757211A discloses a hub shaft connecting the turbine blades to a gear box. The hub has a funnel-shaped body, which is suspended at the back in a machine housing and carries main bearings on its outside; the blades rest on the outer ring of the main bearings. This construction aims to expose the hub shaft to torsional forces only. Such a shaft is a typical, stiff-bodied drive shaft.

As turbine power outputs increase, this approach becomes less effective. The demands of increased input torque and increased gearbox mass require a joint between rotor shaft and gearbox input member which is very large, and time consuming to assemble, due to very high numbers of bolts or heavy interference fits. Additionally, the increased gearbox mass (particularly when it is considered advantageous to directly mount the generator to the downwind end of the gearbox) introduces very high loads into the bearings supporting the gearbox input member in the gearbox housing.

It may therefore be considered advantageous to mount the gearbox directly and substantially rigidly to the bedplate. This reduces the problems described above, but requires the incorporation of some other means of accommodating structural deflections, manufacturing tolerances, and other effects which may cause the gearbox input member to be misaligned with respect to the rotor shaft.

This compensation is achieved in some existing designs by the inclusion of elastomeric elements in the joint between the rotor shaft and gearbox input member. As these elements are of much lower stiffness than the rest of the drivetrain, the misalignment can be accommodated without producing high reaction loads. However, current elastomer technology cannot match the (typically) 20 year design life required for wind turbines, due to degradation from repeated loading, atmospheric and fluid contaminants, and exposure to ultraviolet light. This necessitates repeated replacement within the turbine lifetime.

WO2008/124674A1 teaches that there is a problem with power transmission coupling elements which accommodate axial, bending, and transverse displacements, because they must do so while simultaneously carrying relatively large torsional large torsional loads. A flexible composite driveshaft is disclosed which overcomes problems associated with metallic flex elements which are that it is difficult for a such elements simultaneously to carry very large torsional shear and remain conveniently compliant to imposed out-of-axis distortions. US2011/0309631A1 (EP2397690) discloses a composite shaft of this type to transfer torque from the wind turbine rotor to the generator, the shaft having high torsional strength but being flexible in bending. However, a number of problems with a composite main shaft have been identified (OceanWise magazine, 2012, Volume 1, http://www.lorc.dk/oceanwise-magazine/archive/2012-1/experts-disagree-can-the-wind-turbine's-cast-iron-main-shaft-be-replaced-by-carbon-fiber), including a need for a larger diameter, a bigger front bearing and expense. Steel on the other hand has the necessary strength in all directions, because it is a crystalline material

Various other existing designs compensate for misalignments and deflections through the use of couplings consisting of a set of radially protruding teeth associated with each component, and an intermediate component with two sets of radially protruding teeth, one set of which engage with the teeth associated with the rotor shaft, and the other set engage with the teeth associated with the gearbox input member. By the application of particular geometry to each mating pair of teeth, it can be arranged that each set of teeth permits rotation around axes perpendicular to the main axis, and as a complete coupling, the effect of these rotations combine to permit translation along axes perpendicular to the main axis. This type of coupling is commonly referred to as a 'gear coupling', and in addition to their use in existing wind turbines, they are a common method of accommodating misalignment in a wide range of industrial applications. However they are considerably more complex than other known methods for rotor shaft to gearbox connection, introducing a number of additional components, and requiring good lubrication. As their mode of operation involves sliding between two metal surfaces, they will be subject to wear. Their use in this application is, therefore, a risk to the reliability of the turbine over its design lifetime.

It can be seen therefore, that an invention which permitted the direct mounting of the gearbox to the turbine structure yet still permitted the connection between rotor shaft and gearbox input member to be made without either elastomeric elements or sliding/wearing parts, in which the main shaft is flexible but constructed from iron or steel would be advantageous in designing a reliable wind turbine for larger power ratings.

### Disclosure of Invention

According to a first aspect of the invention, there is provided a power transmission system for increasing the rotational speed from a rotor hub of a wind turbine, which includes: a rotor shaft configured to be driven by the rotor hub about a main axis; a speed-increasing gearbox having a gearbox input member; a support structure supporting the rotor shaft and gearbox; a rotor shaft housing connected to the supporting structure; and a main shaft having an upwind end connected to the rotor shaft and a downwind end connected to the gearbox input member. The invention is characterised by the main shaft comprising steel or iron and extending downwind along the main axis inside the rotor shaft, the main shaft having a slender elongate portion disposed between the upwind end and the downwind end, the upwind and downwind ends having a larger diameter than the elongate portion, whereby the main shaft has a high torsional strength but is flexible in bending so that radial and angular misalignment between the rotor shaft and the gearbox input member is accommodated. According to the invention, the rotor shaft is supported within the rotor shaft housing by an upwind rotor bearing and a downwind rotor bearing, the bearings configured to permit rotation of the rotor shaft about the main axis while limiting movement in other directions. According to the invention, the support structure comprises a bearing arrangement supporting the rotor shaft for rotation about the main axis, the bearing arrangement restraining movement of the rotor hub and rotor shaft when subjected to loads other than torque around the main axis of the drivetrain. This means that the bearing arrangement permits rotation of the rotor shaft about the main axis while limiting movement in other directions. This means that all loads on the rotor hub, with the exception of moments about the main axis, are transmitted through rotor shaft, rotor bearings, and rotor shaft housing into the supporting structure.

Preferably, the support structure comprises a rotor housing and in which the bearing arrangement is located between the rotor housing and the rotor shaft. Preferably, the bearing arrangement comprises at least one bearing.

Preferably, the main shaft has a smaller diameter than the rotor shaft, the gearbox input member, the rotor shaft housing or the gearbox housing. This means that the stiffness of the main shaft is correspondingly lower, and thus where radial and angular misalignments exist between the rotor shaft and the gearbox input member as a result of manufacturing tolerances, differential thermal expansion of the drivetrain, deflection of the entire structure under load, or any other factors, this misalignment will largely be accommodated by deflection of the main shaft, and only a small part will result in deflection of the gearbox input member and associated gears and bearings. This benefit can be maximised by increasing the length of main shaft to the maximum permitted by the available package space.

Preferably, the gear box comprises a gearbox housing rigidly connected to the support structure. Preferably, the gearbox comprises a gearbox housing rigidly connected to the rotor shaft housing.

Preferably, the gearbox housing comprises one or more bearings adapted to support the gearbox input member for rotation about the main axis. This means that rotation around the main axis is permitted while motions in other directions are restricted. Preferably, a degree of translation of the gearbox input member along the main axis is permitted to compensate for thermal expansion of the rotating parts relative to the gear box housing / rotor shaft housing.

Preferably, the upwind end of the main shaft is rigidly connected to the rotor shaft and the downwind end of the main shaft is rigidly connected to the gearbox input member, whereby a moment about the main axis of the drivetrain is transmitted from the rotor shaft to the gearbox input member by the driving shaft.

Preferably, the main shaft is connected to the rotor shaft via an intermediate component. Preferably, the intermediate component has a greater flexibility than the rotor shaft and the supporting structure.

Preferably, the main shaft is connected to the gearbox input member via an intermediate component. Preferably, the second intermediate component comprises a face spline connection.

According to further aspects of the invention, there is provided a wind turbine.

The present invention will now be described, by way of example only, with references to the accompanying drawings, in which:

### Brief Description of the Drawings

Fig. 1 is a perspective view of an example of a wind turbine;
Fig. 2 shows a power transmission system of the present invention; and
Fig. 3 shows a flexible main shaft of the present invention.

### Best Mode for Carrying Out the Invention

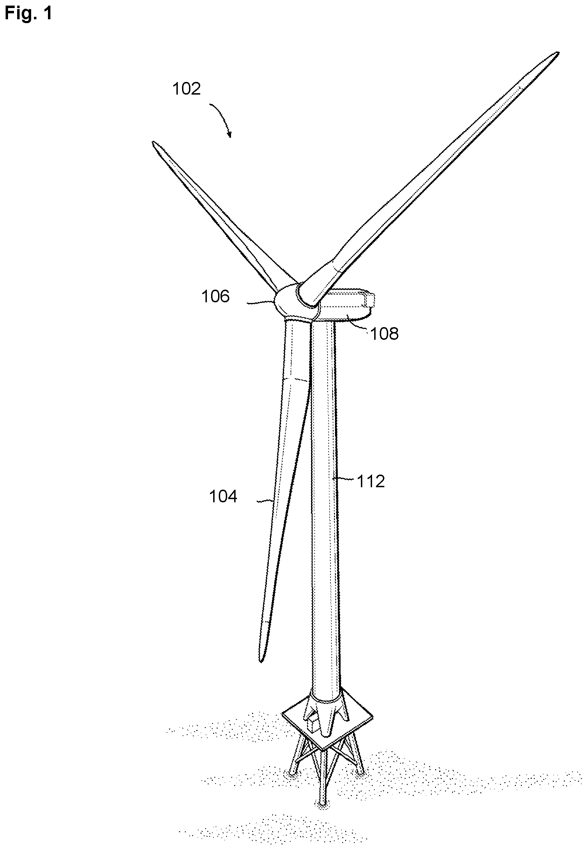

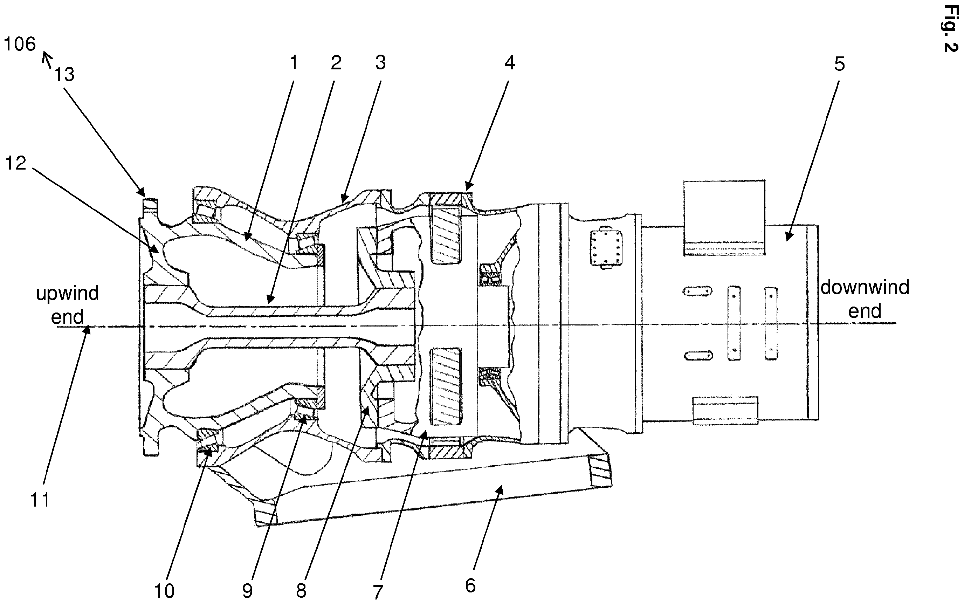

Fig. 1 is a perspective view of an example of a wind turbine. Although an offshore wind turbine is shown, it should be noted that the description below may be applicable to other types of wind turbines. The wind turbine 102 includes rotor blades 104 mounted to a hub 106, which is supported by a nacelle 108 on a tower 112. Wind causes the rotor blades 104 and hub 106 to rotate about a main axis 11 (Fig. 2). This rotational energy is delivered to a power transmission system of the type shown in Fig. 2 housed within nacelle 108.

Fig. 2 shows a wind turbine drivetrain comprising rotor shaft 1, which supports rotor hub 106 (Fig. 1) by means of flange 13. Rotor shaft 1 is supported within rotor shaft housing 3 by upwind rotor bearing 10 and downwind rotor bearing 9, which together permit rotation of rotor shaft 1 about main axis 11 while limiting movement in other directions. The terms "upwind" and "downwind" in the context of the present invention assume that main axis 11 is orientated with the wind direction; thus rotor hub 106 and flange 13 are at the "upwind" end of the drivetrain, and generator 5 is at the "downwind" end of the drivetrain. Rotor shaft housing 3 is connected to supporting structure 6, and supporting structure 6 is connected to a tower via a yaw mechanism (tower and yaw mechanism are not shown). The result of this arrangement is that all loads on rotor hub 102, with the exception of moments about main axis 11, are transmitted through rotor shaft 1, rotor bearings 9,10, and rotor shaft housing 3 into the supporting structure. Other arrangements which achieve this result will be apparent to the skilled person; for example, numbers of rotor bearings other than two may be used, or rotor shaft housing 3 and supporting structure 6 may be combined into a single component.

Rotor shaft housing 3 further supports gearbox housing 4 via a bolted connection between a downwind end of rotor shaft housing 3 and an upwind part of gearbox housing 4. Gearbox housing 4 supports generator 5 via a similar bolted connection between a downwind part of gearbox housing 4 and an upwind part of the generator housing. In other embodiments of the invention, the gearbox, generator 5, or both may be supported instead by direct connection to the supporting structure.

The gearbox includes gearbox input member 7, which is supported within gearbox housing 4 by one or more bearings 14 in such a way as to permit rotation around the main axis while restricting motions in other directions, or optionally, to permit some degree of translation along main axis 11 to compensate for thermal expansion of the rotating parts relative to the gear box housing 4 / rotor shaft housing 3. In the embodiment shown in Fig. 2, gearbox input member 7 is a planet carrier of a planetary gear stage.

Transmission of torque from rotor shaft 1 to gearbox input member 7 is via main shaft 2, which is connected in a substantially rigid fashion to rotor shaft 1 and gearbox input member 7. Main shaft 2 is made of steel or iron. In the embodiment shown in Fig. 2, at an upwind end of main shaft 2, the connection is made directly to rotor shaft 1, via a disc or cone shaped section 12 integral to the rotor shaft. At a downwind end of main shaft 2, the connection is achieved via an interference fit on a cylindrical interface between gearbox input member 7 and main shaft 2. The interference fit described connects main shaft 2 to an intermediate component 8, which in turn has a further substantially rigid connection to gearbox input member 7. This further connection might be made to transmit torque using a system of protrusions and recesses in the mating faces of the intermediate component 8 and the input member 7. Such an arrangement is defined in the present invention as a 'face spline' connection.

It will be apparent that these connections can be achieved by other methods while maintaining the function of the invention. For example, the disc or cone shaped section 12 associated with the upwind connection may be manufactured integral to main shaft 2 rather than rotor shaft 1, or may be a separate component attached to rotor shaft 1 by a further connection. Similarly, intermediate component 8 associated with the downwind connection may be manufactured integral to either main shaft 2 or gearbox input member 7. The connections between components may be made by means other than a cylindrical interference fit, such as bolts, keyways, or interference fits on a tapered interface, or any other substantially rigid means of connection.

Main shaft 2 is of substantially smaller diameter than rotor shaft 1, gearbox input member 7, rotor shaft housing 3 or gearbox housing 4. As a result, its stiffness is correspondingly lower, and thus where radial and angular misalignments exist between rotor shaft 1 and the gearbox input member 7 as a result of manufacturing tolerances, differential thermal expansion of the drivetrain, deflection of the entire structure under load, or any other factors, this misalignment will largely be accommodated by deflection of main shaft 2, and only a small part will result in deflection of gearbox input member 7 and associated gears and bearings. This benefit can be maximised by increasing the length of main shaft 2 to the maximum permitted by the available package space.

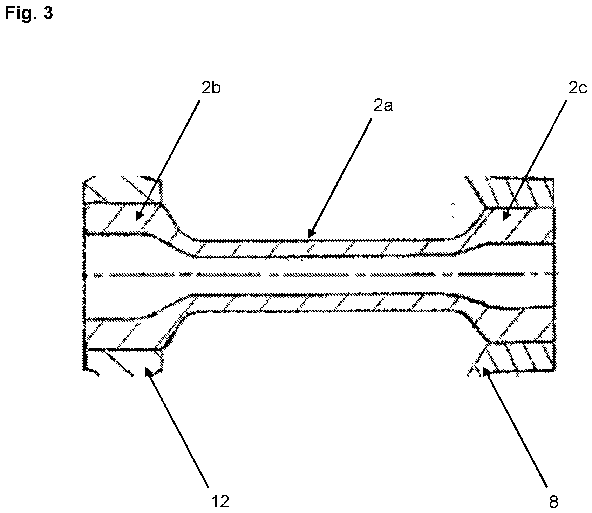

Referring now to Fig. 3, which shows the design of tubular main shaft 2 having the required flexible properties, a slender elongate portion 2a is disposed between an upwind end 2b and a downwind end 2c. Upwind end 2b is connected directly to rotor shaft 1, via a disc or cone shaped section 12 integral to the rotor shaft. Downwind end 2c is rigidly connected to gearbox input member 7. The diameter of the upwind and downwind ends 2b,2c is larger than the diameter of slender portion 2a. This means that torque transfer at the upwind and downwind ends 2b,2c is facilitated without comprising flexure of the slender portion 2a. An intermediate component 8 may be disposed between downwind end 2c and gearbox input member 7. In the embodiment shown in Fig. 3, the shaft is hollow.

Further benefit may be achieved by reducing the stiffness of other parts of the structure. In particular, the section of rotor shaft 12 which supports main shaft 2 may be designed so as to reduce its stiffness in response to moments around axes perpendicular to main axis 11. This would permit tilting of main shaft 2 relative to rotor shaft 1, and increase the capability of the drivetrain to accommodate misalignment without adverse effects on the gears and bearings in the gearbox. A similar effect may be achieved by reducing the stiffness of intermediate component 8 in response to moments around axes perpendicular to main shaft 2.

### Industrial Applicability

A flexible shaft design for a wind turbine is achieved which has a high torsional strength but is flexible in bending, but which does not have a larger diameter nor a need for correspondingly bigger front bearings, and which avoids the expense of composite materials. Thus the main shaft has a greater flexibility in response to loads other than a moment about said main axis than the rotor shaft and the gearbox housing, and the supporting structure

## Claims

1. A power transmission system for increasing a rotational speed of a rotor hub (106) of a wind turbine (102), comprising:
a rotor shaft (1) configured to be driven by the rotor hub (106) about a main axis (11);
a speed-increasing gearbox comprising a gearbox input member (7);
a support structure (6) supporting the rotor shaft (1) and the gearbox;
a rotor shaft housing (3) connected to the support structure (6); and
a main shaft (2) having an upwind end (2b) connected to the rotor shaft (1), and
a downwind end (2c) connected to the gearbox input member (7); and the main shaft (2) comprising steel or iron and extending downwind along the main axis (11) inside the rotor shaft (1), the main shaft (2) having a slender elongate portion disposed between the upwind end and the downwind end, the upwind and downwind ends (2b,2c) having a larger diameter than the elongate portion (2a), whereby the main shaft (2) has a high torsional strength but is flexible in bending so that radial and angular misalignment between the rotor shaft (3) and the gearbox input member (7) is accommodated;
**characterised by:** rotor shaft (1) supported within the rotor shaft housing (3) by an upwind rotor bearing (10) and a downwind rotor bearing (9), the bearings configured to permit rotation of the rotor shaft (1) about the main axis (11) while limiting movement in other directions.

2. A power transmission system according to claim 1, in which the support structure (6) comprises a bearing arrangement supporting the rotor shaft (1) for rotation about the main axis (11), the bearing arrangement restraining movement of the rotor hub (106) and rotor shaft (1) when subjected to loads other than torque around the main axis (11) of the drivetrain.

3. A power transmission system according to claim 2, in which the support structure (6) comprises a rotor housing and in which the bearing arrangement is located between the rotor housing (3) and the rotor shaft (1).

4. A power transmission system according to claim 3, in which the bearing arrangement comprises at least one bearing.

5. A power transmission system according to claim 3 or claim 4, in which the gearbox comprises a gearbox housing (4) rigidly connected to the rotor shaft housing (3).

6. A power transmission system according to claim 5, in which the main shaft (2) has a smaller diameter than the rotor shaft (1), the gearbox input member (7), the rotor shaft housing (3) or the gearbox housing (4).

7. A power transmission system according to any of claims 1 to 4, in which the gear box comprises a gearbox housing (4) rigidly connected to the support structure (6).

8. A power transmission system according to any of claims 5 to 7, in which the gearbox housing (4) comprises one or more bearings adapted to support the gearbox input member (7) for rotation about the main axis (11).

9. A power transmission system according to claim 8, in which the one or more bearings are further adapted to permit a degree of translation of the gearbox input member along the main axis (11).

10. A power transmission system according to any preceding claim, in which the upwind end of the main shaft (2) is rigidly connected to the rotor shaft (1) and the downwind end of the main shaft (2) is rigidly connected to the gearbox input member (7), whereby a moment about the main axis (11) of the drivetrain is transmitted from the rotor shaft (1) to the gearbox input member (7) by the main shaft (2).

11. A power transmission system according to any preceding claim, in which the main shaft (2) is connected to the rotor shaft (1) via a first intermediate component.

12. A power transmission system according to claim 11, in which the first intermediate component has a greater flexibility than the rotor shaft (1) and the supporting structure (6).

13. A power transmission system according to any preceding claim, in which the main shaft (2) is connected to the gearbox input member (7) via a second intermediate component (8).

14. A power transmission system according to claim 13, in which the second intermediate component (8) comprises a face spline connection.

15. A power transmission system according to any preceding claim, in which the gear box input member is a planet carrier of a planetary gear box system.

16. A wind turbine comprising a power transmission system according to any of the preceding claims.

## Patentansprüche

1. Kraftübertragungssystem zum Erhöhen einer Drehgeschwindigkeit einer Rotornabe (106) einer Windkraftanlage (102), umfassend:
eine Rotorwelle (1), die ausgestaltet ist, durch die Rotornabe (106) um eine Hauptachse (11) angetrieben zu werden;
ein geschwindigkeitserhöhendes Getriebe umfassend ein
Getriebeeingangselement (7);
eine Stützstruktur (6), die die Rotorwelle (1) und das Getriebe stützt;
ein Rotorwellengehäuse (3), das mit der Stützstruktur (6) verbunden ist; und eine Hauptwelle (2), die ein luvseitiges Ende (2b), das mit der Rotorwelle (1) verbunden ist, und ein leeseitiges Ende (2c), das mit dem Getriebeeingangselement (7) verbunden ist, aufweist;
und wobei die Hauptwelle (2) Stahl oder Eisen umfasst und sich entlang der Hauptachse (11) innerhalb der Rotorwelle (1) leeseitig erstreckt, wobei die Hauptwelle (2) einen schmalen länglichen Abschnitt aufweist, der zwischen dem luvseitigen Ende und dem leeseitigen Ende angeordnet ist, wobei die luvseitigen und leeseitigen Enden (2b, 2c) einen größeren Durchmesser als der länglichen Abschnitt (2a) aufweisen, wodurch die Hauptwelle (2) eine hohe Drehfestigkeit aufweist, aber flexibel zu biegen ist, sodass ein Radial- und Winkelversatz zwischen der Rotorwelle (3) und dem Getriebeeingangselement (7) ausgeglichen wird;
**dadurch gekennzeichnet, dass** die Rotorwelle (1) innerhalb des Rotorwellengehäuses (3) durch ein luvseitiges Rotorlager (10) und ein leeseitiges Rotorlager (9) gestützt wird, wobei die Lager ausgestaltet sind, die Drehung der Rotorwelle (1) um die Hauptachse (11) zuzulassen, während sie eine Bewegung in andere Richtungen begrenzen.

2. Kraftübertragungssystem nach Anspruch 1, bei dem die Stützstruktur (6) eine Lageranordnung umfasst, die die Rotorwelle (1) zur Drehung um die Hauptachse (11) stützt, wobei die Lageranordnung eine Bewegung der Rotornabe (106) und Rotorwelle (1) verhindert, wenn sie anderen Lasten als einem Drehmoment um die Hauptachse (11) des Triebstrangs ausgesetzt sind.

3. Kraftübertragungssystem nach Anspruch 2, bei dem die Stützstruktur (6) ein Rotorgehäuse umfasst und bei dem sich die Lageranordnung zwischen dem Rotorgehäuse (3) und der Rotorwelle (1) befindet.

4. Kraftübertragungssystem nach Anspruch 3, bei dem die Lageranordnung mindestens ein Lager umfasst.

5. Kraftübertragungssystem nach Anspruch 3 oder Anspruch 4, bei dem das Getriebe ein Getriebegehäuse (4) umfasst, das starr mit dem Rotorwellengehäuse (3) verbunden ist.

6. Kraftübertragungssystem nach Anspruch 5, bei dem die Hauptwelle (2) einen kleineren Durchmesser als die Rotorwelle (1), das Getriebeeingangselement (7), das Rotorwellengehäuse (3) oder das Getriebegehäuse (4) aufweist.

7. Kraftübertragungssystem nach einem der Ansprüche 1 bis 4, bei dem das Getriebe ein Getriebegehäuse (4) umfasst, das starr mit der Stützstruktur (6) verbunden ist.

8. Kraftübertragungssystem nach einem der Ansprüche 5 bis 7, bei dem das Getriebegehäuse (4) ein oder mehrere Lager umfasst, die angepasst sind, das Getriebeeingangselement (7) zur Drehung um die Hauptachse (11) zu stützen.

9. Kraftübertragungssystem nach Anspruch 8, bei dem das eine oder die mehreren Lager ferner angepasst sind, einen Grad an Verschiebung des Getriebeeingangselements entlang der Hauptachse (11) zuzulassen.

10. Kraftübertragungssystem nach einem der vorhergehenden Ansprüche, bei dem das luvseitige Ende der Hauptwelle (2) starr mit der Rotorwelle (1) verbunden ist und das leeseitige Ende der Hauptwelle (2) starr mit dem Getriebeeingangselement (7) verbunden ist, wodurch ein Moment um die Hauptachse (11) des Triebstrangs über die Hauptwelle (2) von der Rotorwelle (1) zu dem Getriebeeingangselement (7) übertragen wird.

11. Kraftübertragungssystem nach einem der vorhergehenden Ansprüche, bei dem die Hauptwelle (2) mittels einer ersten Zwischenkomponente mit der Rotorwelle (1) verbunden ist.

12. Kraftübertragungssystem nach Anspruch 11, bei dem die erste Zwischenkomponente eine größere Flexibilität als die Rotorwelle (1) und die Stützstruktur (6) aufweist.

13. Kraftübertragungssystem nach einem der vorhergehenden Ansprüche, bei dem die Hauptwelle (2) mittels einer zweiten Zwischenkomponente (8) mit dem Getriebeeingangselement (7) verbunden ist.

14. Kraftübertragungssystem nach Anspruch 13, bei dem die zweite Zwischenkomponente (8) eine Stirnverzahnungsverbindung umfasst.

15. Kraftübertragungssystem nach einem der vorhergehenden Ansprüche, bei dem das Getriebeeingangselement ein Planetenträger eines Planetengetriebesystems ist.

16. Windkraftanlage umfassend ein Kraftübertragungssystem nach einem der vorhergehenden Ansprüche.

## Revendications

1. Système de transmission mécanique destiné à augmenter la vitesse de rotation d'un moyeu de rotor (106) d'une éolienne (102), comprenant :
un arbre de rotor (1) conçu pour être entraîné en rotation par le moyeu de rotor (106) autour d'un axe principal (11) ;
un multiplicateur de vitesse comprenant un élément d'entrée de multiplicateur (7) ;
une structure support (6) portant l'arbre de rotor (1) et le multiplicateur ;
un carter d'arbre de rotor (3) relié à la structure support (6) ; et
un arbre principal (2) possédant une extrémité amont (2b) reliée à l'arbre de rotor (1) et une extrémité aval (2c) reliée à l'élément d'entrée de multiplicateur (7) ;
l'arbre principal (2) comportant de l'acier ou du fer et s'étendant en aval le long de l'axe principal (11) à l'intérieur de l'arbre de rotor (1), l'arbre principal (2) possédant une partie élancée allongée disposée entre l'extrémité amont et l'extrémité aval, les extrémités amont et aval (2b, 2c) possédant un diamètre supérieur à celui de la partie allongée (2a), ce qui implique que l'arbre principal (2) présente une grande résistance en torsion mais une souplesse en flexion, qui permet de compenser un désalignement radial et angulaire entre l'arbre de rotor (1) et l'élément d'entrée de multiplicateur (7) ;
**caractérisé en ce que** l'arbre de rotor (1) est maintenu dans le carter d'arbre de rotor (3) par un roulement amont de rotor (10) et un roulement aval de rotor (9), lesdits roulements étant conçus pour autoriser la rotation de l'arbre de rotor (1) sur l'axe principal (11) tout en limitant le mouvement dans les autres directions.

2. Système de transmission mécanique selon la revendication 1, dans lequel la structure support (6) comprend un ensemble de roulements maintenant l'arbre de rotor (1) dans sa rotation sur l'axe principal (11), ledit ensemble de roulements empêchant le mouvement du moyeu de rotor (106) et de l'arbre de rotor (1) lorsqu'ils sont soumis à des charges différentes du couple autour de l'axe principal (11) de la chaîne dynamique.

3. Système de transmission mécanique selon la revendication 2, dans lequel la structure support (6) comprend un carter de rotor et dans lequel l'ensemble de roulements est disposé entre ledit carter de rotor et l'arbre de rotor (1).

4. Système de transmission mécanique selon la revendication 3, dans lequel l'ensemble de roulements comprend au moins un roulement.

5. Système de transmission mécanique selon la revendication 3 ou 4, dans lequel le multiplicateur comprend un carter de multiplicateur (4) relié de manière rigide au carter d'arbre de rotor (3).

6. Système de transmission mécanique selon la revendication 5, dans lequel l'arbre principal (2) présente un diamètre inférieur à celui de l'arbre de rotor (1), de l'élément d'entrée de multiplicateur (7), du carter d'arbre de rotor (3) ou du carter de multiplicateur (4).

7. Système de transmission mécanique selon l'une quelconque des revendications 1 à 4, dans lequel le multiplicateur comprend un carter de multiplicateur (4) relié de manière rigide à la structure support (6).

8. Système de transmission mécanique selon l'une quelconque des revendications 5 à 7, dans lequel le carter de multiplicateur (4) comprend un ou plusieurs roulements conçus pour maintenir l'élément d'entrée de multiplicateur (7) en rotation sur l'axe principal (11).

9. Système de transmission mécanique selon la revendication 8, dans lequel un ou plusieurs roulements sont en outre conçus pour autoriser un degré de translation du multiplicateur sur l'axe principal (11).

10. Système de transmission mécanique selon l'une quelconque des revendications précédentes, dans lequel l'extrémité amont de l'arbre principal (2) est reliée de manière rigide à l'arbre de rotor (1) et l'extrémité aval de l'arbre principal (2) est reliée de manière rigide à l'élément d'entrée de multiplicateur (7), ce qui implique que l'arbre principal (2) transmet un moment de la ligne de transmission autour de l'axe principal (11), de l'arbre de rotor (1) à l'élément d'entrée de multiplicateur (7).

11. Système de transmission mécanique selon l'une quelconque des revendications précédentes, dans lequel l'arbre principal (2) est relié à l'arbre de rotor (1) au moyen d'un premier composant intermédiaire.

12. Système de transmission mécanique selon la revendication 11, dans lequel le premier composant intermédiaire est plus souple que l'arbre de rotor (1) et que la structure support (6).

13. Système de transmission mécanique selon l'une quelconque des revendications précédentes, dans lequel l'arbre principal (2) est relié à l'élément d'entrée de multiplicateur (7) au moyen d'un second composant intermédiaire (8).

14. Système de transmission mécanique selon la revendication 13, dans lequel le second composant intermédiaire (8) comprend une liaison par denture frontale.

15. Système de transmission mécanique selon l'une quelconque des revendications précédentes, dans lequel l'élément d'entrée de multiplicateur est un porte-satellites d'un système multiplicateur planétaire.

16. Éolienne comprenant un système de transmission mécanique selon l'une quelconque des revendications précédentes.
